# EUROPEAN PATENT APPLICATION

(11) **EP 1 619 812 A1**
(43) Date of publication of application: **25.01.2006**
(21) Application number: 04017377.5
(22) Date of filing: 22.07.2004
(51) Int. Cl.: H04B 17/00

(54) **Receiver signal strength indicator having an automatic outputting detection circuit**

(71) Applicant: Microelectronics Technology Inc., Hsinchu (TW)
(72) Inventor: Chang, Jason L. C., Hsinchu Taiwan R.O.C. (TW); Jiang, Ming Hong, Hsinchu Taiwan R.O.C. (TW)
(74) Representative: Liesegang, Eva

(57) **Abstract**

Receiver signal strength indicator, having an automatic outputting detection circuit, can immediately detect whether its output terminals are connected to a specific apparatus or not. The RSSI comprises an RSSI signal generator, an A/D converter, an automatic outputting detection circuit and at least one output terminal. The automatic outputting detection circuit includes a current detection circuit and an interruption signal generator. When a current passes through the output terminal, the current detection circuit detects the occurrence of the current and generates a push signal. The push signal triggers the interruption signal generator, which in turn generates an interruption signal, and then an RSSI signals are output from the RSSI signal generator due to the interruption signal. The A/D converter converts the RSSI signal into an analog signal. Afterward, the analog signal is output to the exterior through the output terminal.

## Description

### BACKGROUND OF THE INVENTION

### 1. Field of Invention

The present invention relates to a receiver signal strength indicator (RSSI) having an automatic outputting detection circuit, and more particularly, to an RSSI capable of immediately detecting whether its output terminals are connected to a specific apparatus or not, and then automatically generating an interruption signal to interrupt its system.

### 2. Description of Related Art

In the practical applications of long-distance wireless communication technology, alignment and adjustment have been very difficult and time-consuming works within the installation of antennas all the time. Therefore, assisting alignment and adjustment functions are very critical for a wireless apparatus employed in an outdoor wireless communication network. The RSSI apparatus is a powerful tool usually employed in the adjustment of antennas.

Nowadays, wireless apparatuses, compatible with Wi-Fi communication protocols, generally RSSI signals are generated by chipsets, and then a processed data is displayed on a browse page. Although the user can directly reads the RSSI signals to adjust the antennas through these pages displayed on a screen, but it becomes very inconvenient and impractical to carry a notebook on the tower while one adjusts the antenna. In some apparatuses, simplified adjustment modes are developed for the users to easily finish the difficult outdoor installation of the antennas. These apparatuses separately utilize a network processor to transmit received RSSI data to a specific display device -- a multimeter, an audio frequency apparatus and an LED display, for example. No matter which display device is chosen, the output conversion of the RSSI data necessarily takes up most of the computational capacity of the network processor, degrading the performance of the whole system. Even if the output mode is chosen to activate through page setting or software setting, more manual setting operation is necessary. The user needs to deactivate the output mode by resetting it after all adjustment is finished; otherwise, the performance of the system is degraded because of the existence of the ceaseless output. In conclusion, all these designs are not suitable for easy installation of the wireless apparatus outdoors.

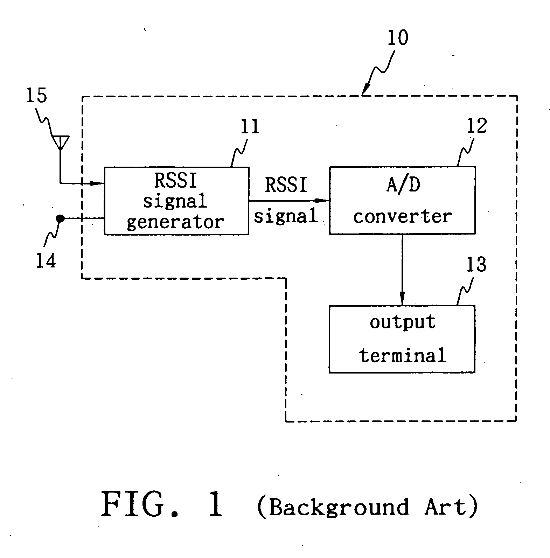

FIG. 1 is a functional block diagram of a conventional RSSI with output terminals. An RSSI 10 comprises an RSSI signal generator 11, an A/D converter 12 and an output terminal 13. The RSSI signal generator 11 is connected to the processor (not shown) of the wireless apparatus through a contact 14, and receives RF signals collected by an antenna 15. The A/D converter 12 converts digitized RSSI signals into analog signals that is output to an exterior measurement apparatus through the output terminal 13.

No independent readable device or display circuit of RSSI data exists in the Wi-Fi wireless apparatus. The recognition operation of any signal strength has to be executed by the processor of the apparatus; hence, the computational capacity of the processor is always occupied. Of course, the performance of the whole wireless apparatus is severely degraded by the occupation.

### SUMMARY OF THE INVENTION

The primary objective of the present invention is to provide a receiver signal strength indicator (RSSI) having an automatic outputting detection circuit. The RSSI can immediately detect whether its output terminals are connected to a specific apparatus or not, and then automatically generates an interruption signal to interrupt the system, for example, setting the RSSI to be at a signal strength output mode.

In order to achieve the objective, the present invention discloses a receiver signal strength indicator having an automatic outputting detection circuit, which can immediately detect whether its output terminals are connected to a specific apparatus or not. The RSSI comprises an RSSI signal generator, an A/D converter, an automatic outputting detection circuit and at least one output terminal. The automatic outputting detection circuit includes a current detection circuit and an interruption signal generator. When a current passes through the output terminal, the current detection circuit detects the occurrence of the current and generates a push signal. The push signal triggers the interruption signal generator to generate an interruption signal, and then RSSI signals are output from the RSSI signal generator due to the interruption signal. The A/D converter converts the RSSI signals into an analog signal. Afterward, the analog signal is output to the exterior through the output terminal.

### BRIEF DESCRIPTION OF THE DRAWINGS

The invention will be described according to the appended drawings in which:
FIG. 1 is a functional block diagram of a conventional RSSI with output terminals;
FIG. 2 is a functional block diagram of an RSSI with an automatic outputting detection function in accordance with the present invention;
FIG. 3 is a circuit diagram of an automatic outputting detection circuit in accordance with the present invention; and
FIG. 4 is a circuit diagram of a dummy load placed between a BNC connector and a measurement apparatus in accordance with the present invention.

### PREFERRED EMBODIMENT OF THE PRESENT INVENTION

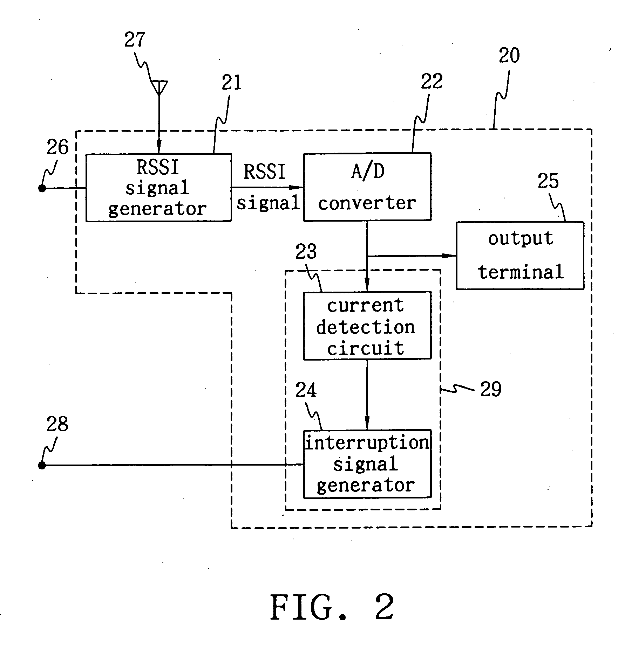

FIG. 2 is a functional block diagram of an RSSI with an automatic outputting detection function in accordance with the present invention. An RSSI 20 comprises an RSSI signal generator 21, an A/D converter 22, an automatic outputting detection circuit 29 and at least an output terminal 25. The automatic outputting detection circuit 29 includes a current detection circuit 23 and an interruption signal generator 24. After the output terminal 25 is connected to a specific measurement apparatus, a current resulted from the connection passes through the output terminal 25. The current detection circuit 24 can detect the occurrence of the current and generate a push signal.

The push signal triggers the interruption signal generator 24, which in turn sends an interruption signal through a contact 28 to the processor (not shown) that is included in the wireless apparatus equipped with the RSSI 20. By way of a contact 26, the processor instructs the RSSI signal generator 21 to output RSSI signals. On the contrary, if the exterior connection of the output terminal 25 is deactivated, the interruption signal generator 24 recovers its high potential level. Therefore, the processor of the wireless apparatus instructs the RSSI signal generator 21 to stop outputting the RSSI signals, and the computational capacity of the processor is released with such instruction. In other words, the RSSI signals start to be processed and output after the output terminal 25 is connected to a specific apparatus. Generally, the RSSI signals are converted by the A/D converter 22 from a digital signal to an analog signal, and then the analog signal is output to the exterior of the wireless apparatus through the output terminal 25.

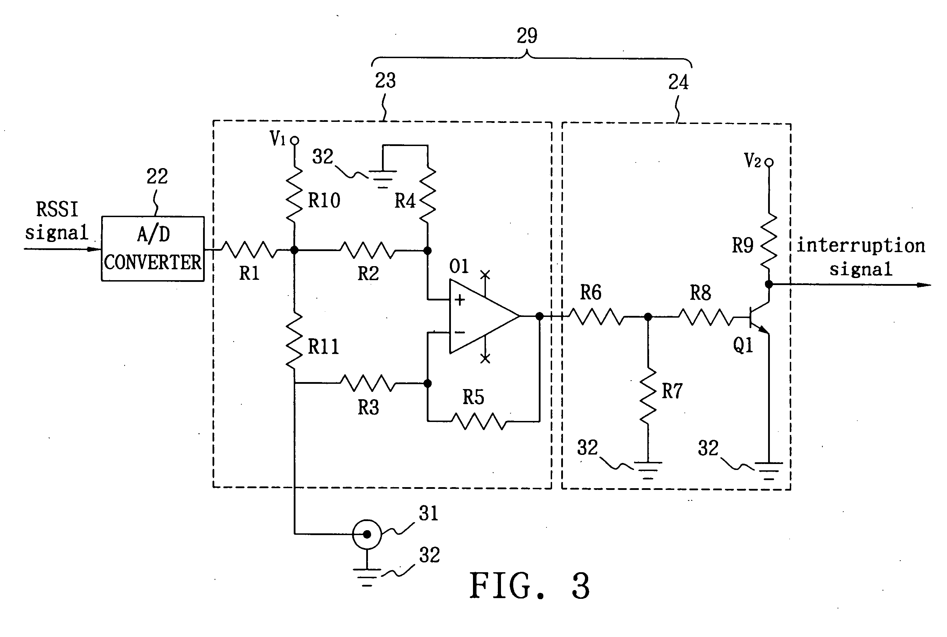

FIG. 3 is a circuit diagram of an automatic outputting detection circuit in accordance with the present invention. After the output terminal of a BNC connecter 31 is connected to a measurement apparatus, a small current passes through a resister R11 because a fixed resister built in the measurement apparatus forms a fixed load. That is, there is a voltage difference between the two terminals of the resister R11. The voltage difference is amplified as a voltage signal by a differential amplifier consisting of resisters R2, R3, R4 and R5 and an amplifier O1. The amplified voltage signal is the same as the aforesaid push signal, and makes a transistor Q 1 at a saturation region by way of a resister R6 and R8. That is, the junction between the collector and base of the transistor Q 1 has forward bias, and meanwhile an interruption signal with a low potential occurs therein.

Referring to FIG. 3, the output terminal of the A/D converter 22 is connected to the center pin of the BNC connecter 31 by way of resisters R1 and R11 in sequence. The shell of the BNC connecter 31 is coupled to a ground 32. V₁ and V₂ are two fixed DC voltage sources such as a 3.3 V source. Furthermore, R10, R7 and R9, respectively, denote resisters. If the exterior cable connected to a measurement apparatus is pulled out from the BNC connecter 31, the output terminal of the interruption signal generator 24 instantly changes its potential from a low level to a high level same as that of V₂.

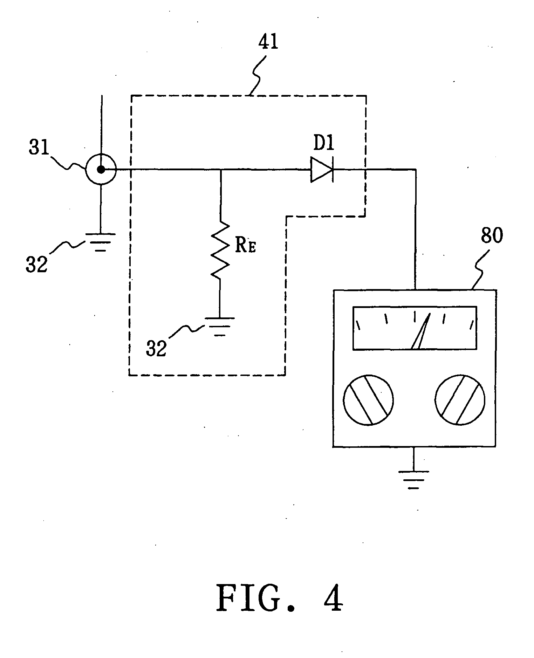

FIG. 4 is a circuit diagram of a dummy load placed between a BNC connector and a measurement apparatus in accordance with the present invention. The dummy load 41 includes a resister R_{E} whose resistance value is far smaller than the internal resistance value of the measurement apparatus 80. When the measurement apparatus 80 and the BNC connecter 31 are connected together, a constant loading current passes through the resister R_{E}. Furthermore, a diode D 1 can remove the constant voltage of the measurement apparatus 80 caused from its internal fixed load so as to keep a pointer voltage meter at a zero reset state no matter how indefinite the RSSI signals are. Therefore, the user can easily and correctly numerate the voltage meter.

The above embodiments of the present invention are intended to be illustrative only. Numerous alternative embodiments may be devised by persons skilled in the art without departing from the scope of the following claims.

## Claims

1. A receiver signal strength indicator having an automatic outputting detection circuit, comprising:
an RSSI signal generator for converting received wireless communication signals into RSSI signals;
at least one output terminal for transmitting the RSSI signals to an exterior connection; and
an automatic outputting detection circuit for detecting if a current passes through the output, terminal and consequently generating an interruption signal to enable the RSSI signal generator to immediately output the RSSI signals.

2. The receiver signal strength indicator having an automatic outputting detection circuit of Claim 1, wherein the automatic outputting detection circuit includes:
a current detection circuit for detecting a current passing through the output terminal and consequently generating a voltage signal; and
an interruption signal generator being capable of changing its output voltage to generate the interruption signal according to the voltage signal of the current detection circuit.

3. The receiver signal strength indicator having an automatic outputting detection circuit of Claim 1 or 2, further comprising an A/D converter for digitizing the RSSI signals and sending the digital signals to the output terminal.

4. The receiver signal strength indicator having an automatic outputting detection circuit of one of the preceding claims, wherein the current detection circuit is a differential amplifier.

5. The receiver signal strength indicator having an automatic outputting detection circuit of one of the preceding claims, wherein the interruption signal generator makes a transistor at a saturation region so as to generate the interruption signal.

6. The receiver signal strength indicator having an automatic outputting detection circuit of one of the preceding claims, wherein the potential of the interruption signal instantly rises when the exterior connection is deactivated from the output terminal.

7. The receiver signal strength indicator having an automatic outputting detection circuit of one of the preceding claims, wherein the output terminal is a BNC connector.

8. The receiver signal strength indicator having an automatic outputting detection circuit of one of the preceding claims, wherein the output terminal is connected to a dummy load.

9. The receiver signal strength indicator having an automatic outputting detection circuit of Claim 8, wherein the dummy load includes a diode and a resister, the anode of the diode is connected to one terminal of the resister and the other terminal of the resister is grounded.

10. The receiver signal strength indicator having an automatic outputting detection circuit of Claim 9, wherein the cathode of the diode is directly connected to the exterior connection.
